# EUROPEAN PATENT SPECIFICATION

(11) **EP 2 597 832 B1**
(45) Date of publication and mention of the grant of the patent: **28.12.2016**
(21) Application number: 11187554.8
(22) Date of filing: 02.11.2011
(51) Int. Cl.: H04L 12/861, H04L 12/879

(54) **MESSAGE BUFFER CONTROLLER**
NACHRICHTENSPEICHERSTEUERGERÄT
CONTRÔLEUR DE TAMPON DE MESSAGE

(43) Date of publication of application: 29.05.2013
(73) Proprietor: Renesas Electronics Europe Limited, Bourne End, Buckinghamshire SL8 5XF (GB)
(72) Inventor: Hoffleit, Thorsten, 40472 Duesseldorf (DE); Mardmoeller, Christian, 40472 Duesseldorf (DE)
(74) Representative: Piotrowicz, Pawel Jan Andrzej

(56) References cited:
- EP-A1- 1 043 661
- WO-A1-2006/079651
- US-A1- 2008 137 679
- US-A1- 2009 323 708
- US-B1- 6 324 178
- Bill Rogers ET AL: "FlexRay Message Buffers - The Host View of a FlexRay System", White Paper, September 2006 (2006-09), pages 1-24, XP55023200, Retrieved from the Internet: URL:http://www.ip-extreme.com/downloads/fl exray_mb_wp.pdf [retrieved on 2012-03-28]

## Description

The present invention relates to an in-vehicle networking protocol communication controller.

A control unit having a microcontroller can exchange data with another control unit using a serial protocol. Data which is to be exchanged or which has been exchanged between control units can be stored in message buffers in memory which is embedded in a control unit. Data to be transmitted can be provided by application software running on the microcontroller. Data which has been received by a control unit can be processed by the application software.

An example of such a control unit is an electronic control unit (ECU) having a FlexRay microcontroller. WO 2006/079651 A1 describes a FlexRay communications module and B. Rogers and S. Schmchtig: "FleRay Message Buffers - The Host View of a FlexRay System", White Paper, pages 1 to 23 (September 2006) discusses implementation, configuration, and use of transmit and receive message buffers in an example FlexRay node.

US 2008/ 137679 A1 describes a communication module for transmitting data in messages via a communication link. Messages are transmitted cyclically in specifiable time windows via the communication link. Messages sent and to be sent via the communication link are initially stored temporarily in a message memory of the communication module and the message to be sent or to be received in a current time window is taken from the message memory and sent, or received and stored in the message memory.

US 2009/ 323708A1 describes a subscriber of a communication system which includes a microprocessor, at least two communication controllers and a peripheral bus. The microprocessor is connected to the communication controllers via the peripheral bus and is also connected via the communication controllers respectively to a communication link of the communication system, via which messages are transmitted. In order to optimize the gateway functionality within the subscriber, a provision is made that at least one of the communication controllers has an active interface via which the communication controller is connected to the peripheral bus and has a logic circuit for independently implementing a gateway functionality.

A control unit may need to forward data from one serial interface to another serial interface. The task of forwarding data can be delayed and/or made more difficult if data is processed by software, particularly if the serial protocol is a time-triggered protocol.

According to a first aspect of the present invention there is provided an in-vehicle networking protocol communications controller as specified in claim 1.

Optional features are specified in the dependent claims.

Thus, a receive message buffer and a transmit message buffer can share content data thereby avoiding the need to copy content from a receive message buffer to a transmit data buffer, for example, when forwarding messages.

The receive configuration data portion may include another pointer to the payload data. The data structure may further comprise a further receive configuration data portion specifying parameters defining another receive message buffer; and a further content data portion for storing further header data and further payload data, wherein the content data and further content data portions are arranged such that the start of the further payload data follows the end of the payload data. This can help facilitate combining payloads of two receive message buffers. Additional receive message buffers can be used and so combine payloads of more than receive message buffers. The further receive configuration data portion may include a pointer to the further payload data.

Respective pointers in the receive configuration data portion and transmit configuration data portion may point to the same point, e.g. the beginning to payload data, in the data structure.

The message buffer controller may be implemented in hardware and may be configured to forward a message comprising the payload data. This can help to regularise message forwarding, for example, by fixing latency times during message forwarding.

The message buffer controller may comprise means for receiving and placing the header data and payload data in the content data portion (as a content data portion of a receive message buffer), means for determining whether the payload data is to be forwarded, means, responsive to determining that the payload data is to be forwarded, for indicating (for example, by setting or causing to set a flag) that payload data (as a content data portion of a transmit message buffer) is available for transmission. The message buffer may further comprising means for determining whether the payload data has been transmitted, and, in response to determining that the payload data has been transmitted, for indicating that the payload data is not available for transmission. This frees the (shared) memory buffer for re-use or reassignment.

The message buffer controller may comprise means for providing the payload data to a protocol controller for transmission (i.e. as a transmit message).

The message buffer controller may further comprise means for providing the header data and payload data to a host (i.e. as a receive message). The data providing means may be configured to provide the data to the host in response to a request from the host.

The message buffer controller may comprise a first circuit configured, in response to receiving the header data and the payload data, to place the header data and the payload data in the content data portion, a second circuit configured to determine whether the payload data is to be forwarded and, in response to determining that the payload data is to be forwarded, to indicate that payload data is available for transmission. The second circuit may be configured to determine whether the payload data has been transmitted and, in response to determining that the payload data has been transmitted, to indicate that the payload data buffer is not available for transmission.

The first circuit (or a third circuit) may be configured for provide the payload data to a protocol controller for transmission (i.e. as a transmit message).

The first circuit (or a third circuit) may be configured to provide the header data and payload data to a host (i.e. as a receive message). The circuit may be configured to provide the data to the host in response to a request from the host.

The message buffer controller may comprise a gateway module which includes a routing table. The routing table may include a list identifying an incoming message buffer (or "source message buffer") and an outgoing message buffer (or "sink message buffer") sharing the same content data. The list may identify more than one incoming message buffer per outgoing message buffer.

According to a second aspect of the present invention there is provided a communications controller comprising a message buffer controller and a protocol controller. The communications controller may conform to an in-vehicle networking standard, such as FlexRay.

According to a third aspect of the present invention there is provided apparatus comprising the communications controller and message memory.

According to a fourth aspect of the present invention there is provided a microcontroller comprising the communications controller and at least one central processing unit (CPU). Message memory (or at least part of message memory) may be within or without the communications controller. Message memory (or at least part of message memory) may be without the microcontroller.

According to a fifth aspect of the present invention there is provided a method comprising using a data structure which comprises a transmit configuration data portion for specifying parameters defining a transmit message buffer, a receive configuration data portion for specifying parameters defining a receive message buffer and a content data portion for storing header data and payload data, wherein the transmit configuration data portion includes a pointer to the payload data and the receive configuration data portion includes a pointer to the header data.

The receive configuration data portion may include another pointer to the payload data.

The data structure may further comprise a further receive configuration data portion specifying parameters defining a another receive message buffer, and a further content data portion storing further header information and further payload data, wherein the content data and further content data are arranged such that the start of the further payload data follows the end of the payload data, wherein the further configuration data portion includes a pointer to the further payload data. The method may be a hardware-implemented method of forwarding a message (or messages).

The method may comprise receiving and placing the header data and payload data in the content data portion determining whether the payload data is to be forwarded, in response to determining that the payload data is to be forwarded, and indicating that payload data is available for transmission. The method may further comprise determining whether the payload data has been transmitted, and, in response to determining that the payload data has been transmitted, indicating that the payload data is not available for transmission.

The method may comprise providing the payload data to a protocol controller for transmission. Thus, the payload data of a receive message can be forwarded for transmission as payload data of a transmit message.

The method may further comprise providing the header data and payload data to a host. Thus, the header data and payload data can be treated as a receive message. The data may be provided in response to a request from the host.

The method may conform to FlexRay.

According to a sixth aspect of the present invention there is provided a data structure comprising a transmit configuration data portion specifying parameters defining a transmit message buffer, a receive configuration data portion specifying parameters defining a receive message buffer and a content data portion storing header data and payload data, wherein the transmit configuration data portion includes a pointer to the payload data and the receive configuration data portion includes a pointer to the header data.

The receive configuration data portion may include another pointer which is a pointer to the payload data.

The data structure may further comprise a further receive configuration data portion specifying parameters defining a further receive message buffer; and a further content data portion storing further header data and further payload data, wherein content data and further content data are arranged such that a start of the further payload data follows an end of the payload data, wherein the further receive configuration data portion includes a pointer to the further payload data.

The data structure may conform to FlexRay.

Certain embodiments of the present invention will now be described, by way of example, with reference to the accompanying drawings in which:
Figure 1 is a schematic block diagram of a microcontroller which includes a communication controller having a message buffer controller;
Figure 2 illustrates message buffer data which includes message buffer configuration data, message buffer service data, message buffer content data and message buffer status data;
Figure 2a illustrates message buffer configuration data in more detail;
Figure 2b illustrates message buffer service data in more detail;
Figure 2c illustrates message buffer content data in more detail;
Figure 2d illustrates message buffer status data in more detail;
Figure 3 is a schematic block diagram of a message buffer controller;
Figure 4 shows forwarding of messages between first and second buses;
Figure 5 is a process flow diagram of a software-implemented method employed during forwarding of a message;
Figure 6 is a schematic block diagram of a message buffer controller including a gateway unit which can be used for message forwarding;
Figure 7 illustrates a receive data structure;
Figure 8 illustrates a transmit data structure;
Figure 9 illustrates a first gateway data structure;
Figure 10 illustrates a gateway data structure employing message gateway source buffer configuration data which includes two data pointers;
Figure 11 illustrates a second gateway data structure;
Figure 12 is a process flow diagram of a hardware-implemented method executed by the message data transfer controller shown in Figure 6 when a frame is received;
Figure 13 is a process flow diagram of a hardware-implemented method executed by the message data transfer controller shown in Figure 6 during frame transmission;
Figure 14 illustrates a circuit for accessing a flag in a set of message buffer service data;
Figure 15 shows a routing table in the gateway unit shown in Figure 6; and
Figure 16 is a process flow diagram of a hardware-implemented method of message forwarding executed by the message buffer controller shown in Figure 6.

In the following description, like parts are denoted by like reference numerals.

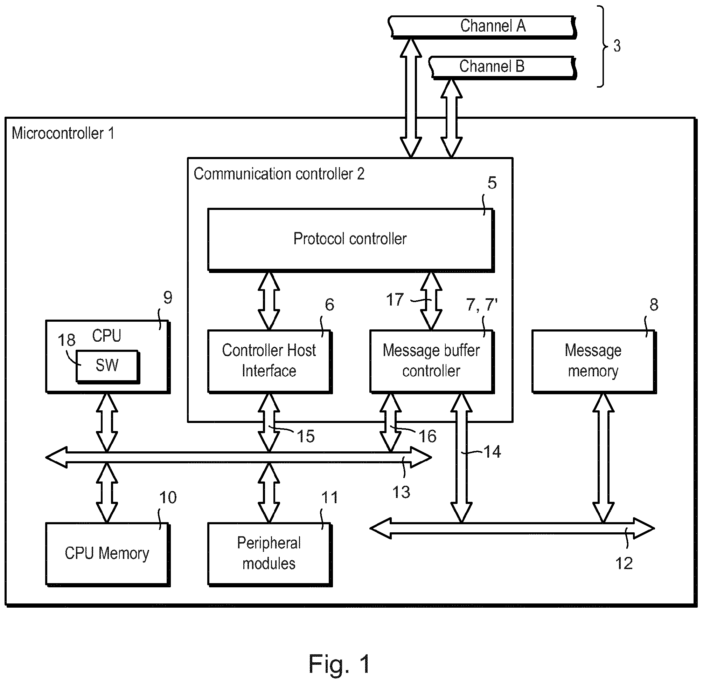

Figure 1 shows a FlexRay microcontroller 1. The microcontroller 1 has at least one communication controller 2 which implements communication with other communication controllers in other nodes (not shown) via channels 3, i.e. channel A and channel B.

As shown in Figure 1, the controller 2 includes a protocol controller 5, a controller host interface controller 6 and a message buffer controller 7. The microcontroller 1 includes message memory 8, at least one central processing unit (CPU) 9 (herein referred to as a "processor"), CPU memory 10 and at least one peripheral module 11, such as a timer module or a controller area network (CAN) interface module.

In this example, the message memory 8 is provided in the form of random access memory (RAM) arranged as peripheral memory. In some embodiments, the message memory 8 may be implemented in the communication controller 2. The message memory 8 may be provided by part of memory, such as CPU memory 10, which can be shared.

The microcontroller 1 includes first and second bus systems 12, 13. The first bus system 12 allows the communication controller 2 to access the message memory 8 via a message buffer data interface 14 in the form logic which handles access to message memory 8. The second bus system 13 allows the communication controller 2, processor(s) 9, CPU memory 10 and peripheral module(s) 11 to exchange data. The second bus system 13 allows the communication controller 2 to access the processor 9 via first and second CPU interfaces 15, 16. In some embodiments, the first and second bus systems 12, 13 are combined into a single bus.

When FlexRay is used as a data transfer protocol, message buffers can be used to transmit and receive messages.

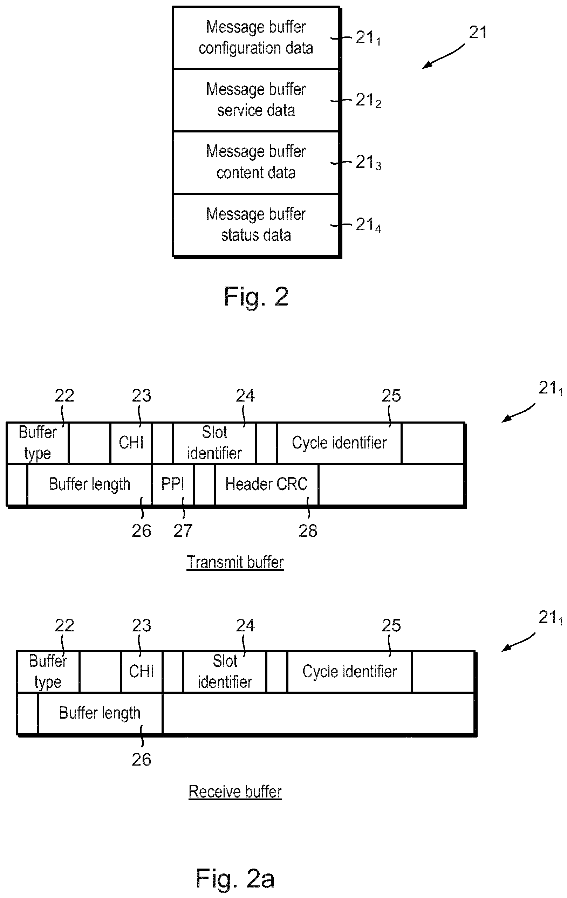

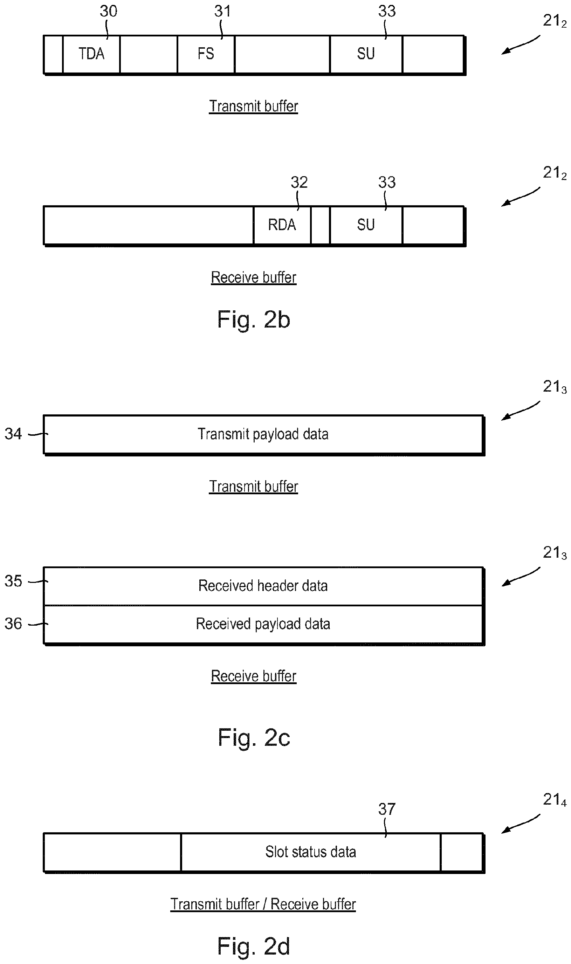

Referring to Figure 2, a message buffer 21 is shown. The message buffer 21 comprises four portions 21₁, 21₂, 21₃, 21₄ which hold message buffer configuration data, message buffer service data, message buffer content data and message buffer status data respectively. Message buffer service data is similar to message buffer status data, but can be controlled by other elements, such as the processor 9. The data forming a message buffer 21 is referred to as "message buffer data" and is stored in the message memory 8 (Figure 1) which is accessible through the message buffer data interface 14.

Referring to Figure 2a, a first portion 21₁ of the message buffer 21 is shown which holds message buffer configuration data. The message buffer configuration data includes buffer type 22 specifying whether the buffer is a transmit buffer or a receive buffer, a channel identifier 23 specifying the channel(s) on which the message is to be transmitted or will be received, a slot identifier 24 indentifying which slot in a communication cycle the message will be transmitted or received, a cycle identifier 25 specifying which cycles the message will be transmitted or received and a buffer length 26 which specifies the length of the available message data in the buffer. For transmit buffers, the message buffer configuration data 21₁ also includes a payload preamble indicator 27 which is used for network management service or message ID filtering and header cyclical redundancy code (CRC) 28.

Referring to Figure 2b, a second portion 21₂ of the message buffer is shown which holds message buffer service data. For a transmit buffer, the message buffer service data includes a transmit payload data available (TDA) indicator 30 and a frame sent (FS) indicator 31. For a receive buffer, the message buffer service data includes a receive payload data available (RDA) indicator 32. For both transmit and receive buffers, the message buffer service data includes slot status updated (SU) indicator 33.

Referring to Figure 2c, a third portion 21₃ of the message buffer is shown which holds message buffer content data. For a transmit buffer, message buffer content data includes transmit payload data 34 (referred to in FlexRay as the variable vTCHI!Message). For a receive buffer, message buffer content data includes received header data 35 (vRF!Header) and received payload data 36 (vRF!Payload).

Referring to Figure 2d, a fourth portion 21₄ of the message buffer 21 is shown which holds message buffer status data. The message buffer status data contains slot status data.

As will be described hereinafter, in embodiments of the present invention, additional data (not shown in Figures 2a to 2d) can be included in the message buffer data to help facilitate forwarding of messages, particularly using a hardware-implemented method of message forwarding.

Referring to Figures 1 and 2, a FlexRay communication controller 2 is provided with more than one message buffer 21. For example, a FlexRay communication controller 2 may have access to 128 or 256 message buffers 21.

The message buffer controller 7 accesses message buffer data to identify an assigned buffer. Based on protocol events provided through an interface 17 with the protocol controller 5, the message buffer controller 7 processes and updates the message buffer content data, the message buffer status data and the message buffer service data. The processor 9 can access message buffer data through the message buffer controller 7 through the CPU interface 16 and message buffer interface 14.

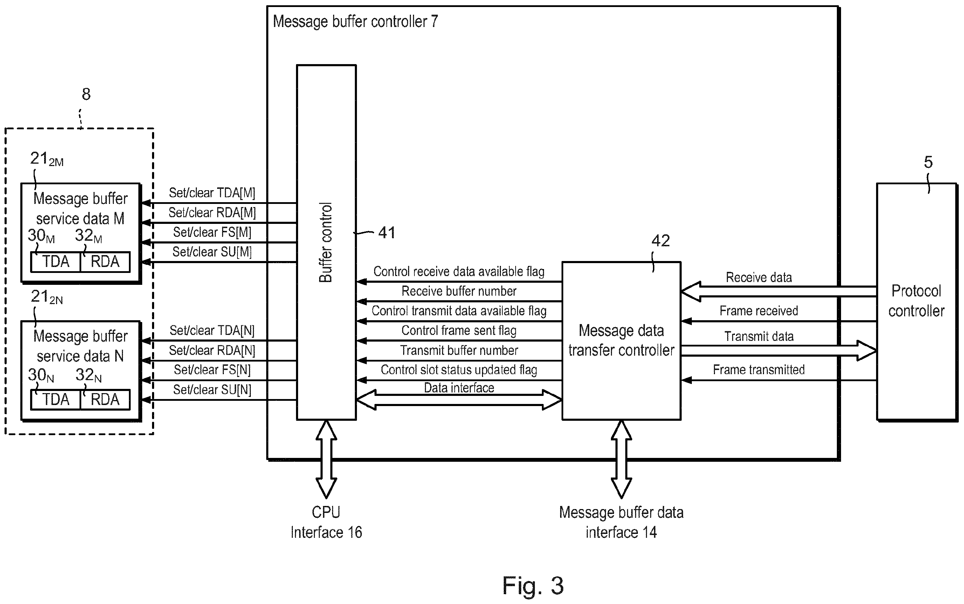

Referring to Figure 3, the message buffer controller 7 is shown in more detail.

As shown in Figure 3, the message buffer controller 7 includes a buffer control module 41 and a message data transfer controller 42.

The buffer control module 41 resolves access conflicts between accesses from the processor 9 (Figure 1) and the message data transfer controller 42. The processor 9 (Figure 1) has read and write access to the buffer configuration data 21₁ (Figure 2), the buffer content data 21₂ (Figure 2) and the message buffer status data 21₄ (Figure 2). The processor 9 (Figure 1) may also control flags in the message buffer service data 21₃ (Figure 2) following the requirements of FlexRay.

An application 18 (Figure 1) running on the processor 9 (Figure 1) may require FlexRay messages to be routed between two FlexRay networks. For example, the two FlexRay networks may take the form of two channels, i.e. channel A and channel B, connected to the communication controller 2 (Figure 1) or two clusters, for example, as a FlexRay TT-E cluster. Other FlexRay network configurations can be used.

To achieve message routing, two complete sets of message buffers can be used.

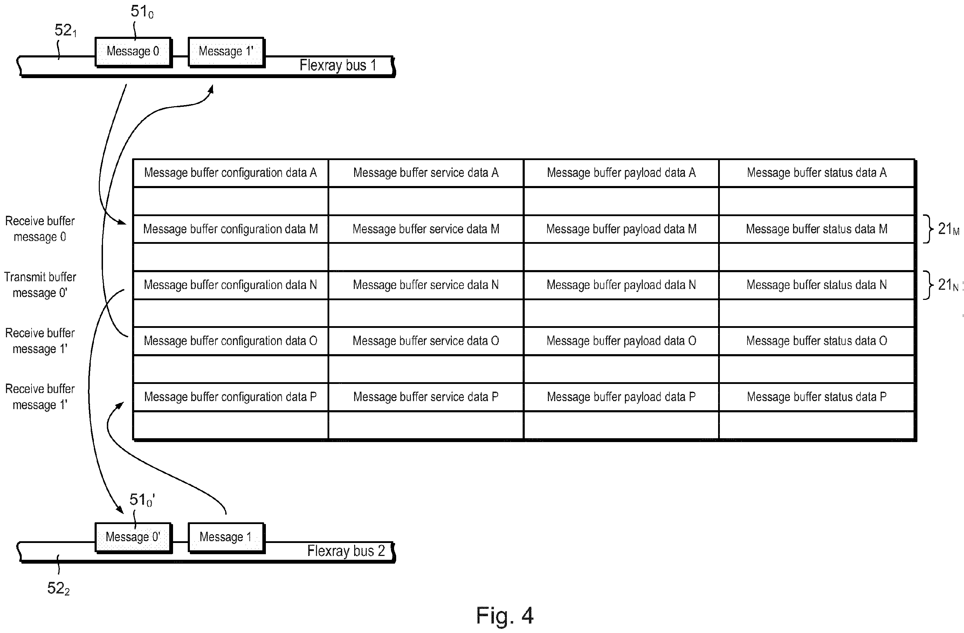

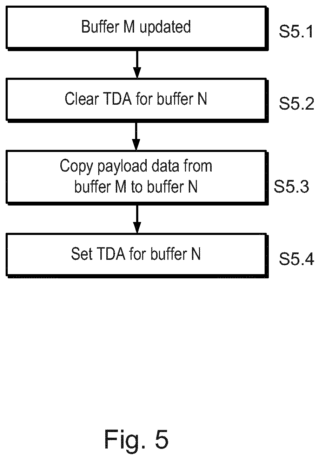

A software-implemented method of routing messages between two networks using two sets of message buffers by the application 18 (Figure 1) will now be described with reference to Figures 3, 4 and 5 which may help provide a better understanding the invention.

Referring to Figures 3, 4 and 5, a first message 51₀ is received from a first FlexRay bus 52₁, for example channel A, and is stored in a first message buffer 21_{M} (step S5.1). The application 18 (Figure 1) determines that an identical message 51₀' should be transmitted on a second FlexRay bus 52₂, for example channel B. A second message buffer 21_{N} is configured. After the first message 51₀ is received and stored in the first message buffer 21_{M}, reception is indicated by setting the receive payload data available (RDA) indicator 32_{M} in the message buffer service data 21_{2M} of the first message buffer 21_{M}. The application 18 (Figure 1) has to provide the payload data for the second message buffer 21_{N} based on the payload data in the first message buffer 21_{M}. In order to ensure that the second message buffer 21_{N} is not used for transmission while the payload data is being updated, the application 18 (Figure 1) clears the transmit payload data available (TDA) indicator 30_{N} for the second message buffer 21_{N} (step S5.2). If this is not done, then an incomplete or erroneous set of payload data might be transmitted. Following this, the payload data is copied by the application 18 (Figure 1) from the first buffer 21_{M} into the second buffer 21_{N} (step S5.3). Upon completion of this step, the application 18 (Figure 1) indicates in the buffer service data of second message buffer 21_{N} that the message buffer holds valid data for transmission by setting the TDA indicator 30_{N} (step S5.4). The buffer content can be transmitted using the second FlexRay bus 52₂.

This approach has at least one drawback.

FlexRay is a time-triggered protocol. Therefore, if a step in the forwarding process is delayed due to the processor 9 (Figure 2) needing to execute a higher-priority software task, transmission of the forwarded message 51₀' might be skipped because the payload data was not available in time.

The present invention seeks to provide an improved method of and apparatus for message forwarding.

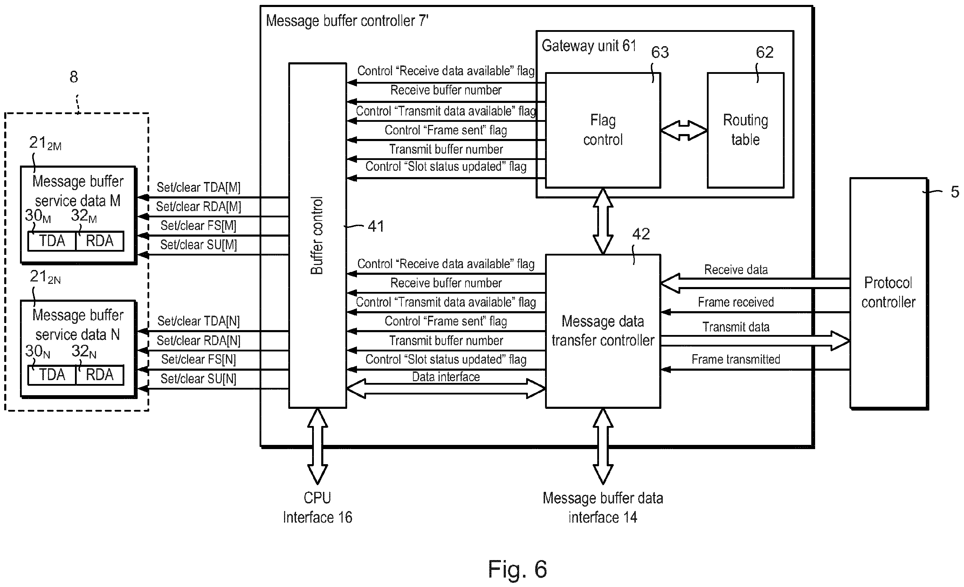

Referring to Figure 6, the microcontroller 1 (Figure 1) is provided with a message buffer controller 7' which is similar to the message buffer controller 7 (Figure 3) described earlier but which also includes a gateway unit (or "sequencer") 61 which includes a routing table 62 and flag control unit 63. The gateway unit 61 is implemented in hardware.

In order to simply access to header data and payload data, and to facilitate forwarding of data, a set of data structures for transmitting, receiving and forwarding data are defined.

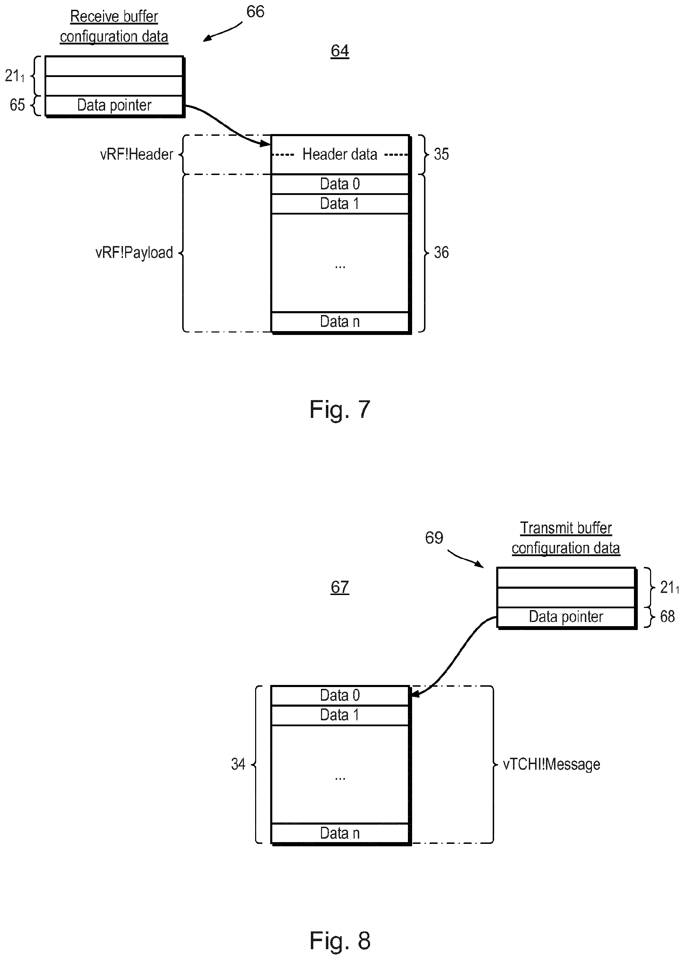

Referring to Figure 7, a receive data structure 64 is shown. Buffer content data, i.e. receive header data 35 (vRF!Header) and receive payload data 36 (vRF!Payload), are provided by a data structure located in the message memory 8 (Figure 1). The receive header data 35 is indexed by a data pointer 65 in extended receive message buffer configuration data 66. The data pointer 66 is an extension to the previously-described message buffer configuration data 21₁. The message buffer status data 21₄ (Figure 2) is provided in a data field that is uniquely associated with each message buffer (not shown). The data structure comprises the header data field (vRF!Header) and the payload data field (vRF!Payload) as required by FlexRay. The size of the payload field depends on the (extended) buffer configuration data 66.

Referring to Figure 8, a transmit data structure 67 is shown. Buffer content data, i.e. transmit payload data 34 (vTCHI!Message), is provided by a data structure located in message memory 8 (Figure 1). The transmit payload data 34 is indexed by a data pointer 68 in extended transmit message buffer configuration data 69. The data pointer 68 is an extension to the previously-described message buffer configuration data 21₁. The message buffer status data 21₄ (Figure 2) is provided in a data field that is uniquely associated with each message buffer. The data structure 34 only holds payload data field for transmission (vTCHI!Message) as required by FlexRay. The size of the payload data field depends on the (extended) buffer configuration data.

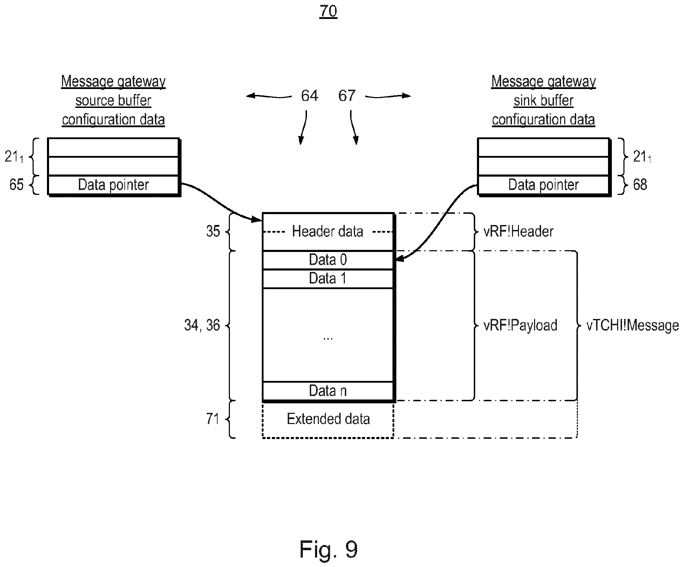

Referring also to Figure 9, a first gateway data structure 70 is shown. The gateway data structure 70 is a combination of a receive data structure 64 and a transmit data structure 67.

Buffer content data is provided by a data structure located in the message memory 8 (Figure 1). The buffer content data comprises receive header data 35 (vRF!Header), receive payload data 36 (vRF!Payload) and, optionally, additional data 71. The receive payload data 36 and optional additional data 71 form the basis of a transmit payload data 34 (vTCHI!Message).

A message gateway source buffer has the same characteristics as the receive buffer 64 (Figure 7) and has a data pointer 65. A message gateway sink buffer has the same characteristics as the transmit buffer 67 (Figure 8) and has a data pointer 68.

The receive data structure 64 and transmit data structure 67 are amalgamated into a single data structure whereby a data pointer 65 of the source buffer 64 indexes the top of the data structure 35 where the header section is located and a data pointer 68 of the sink buffer 67 points to the payload section 34. If application software (not shown) requires additional data 71 be transmitted from the sink buffer within the same FlexRay message, the transmit data structure of the sink buffer can be extended without impacting the data structure of the source buffer.

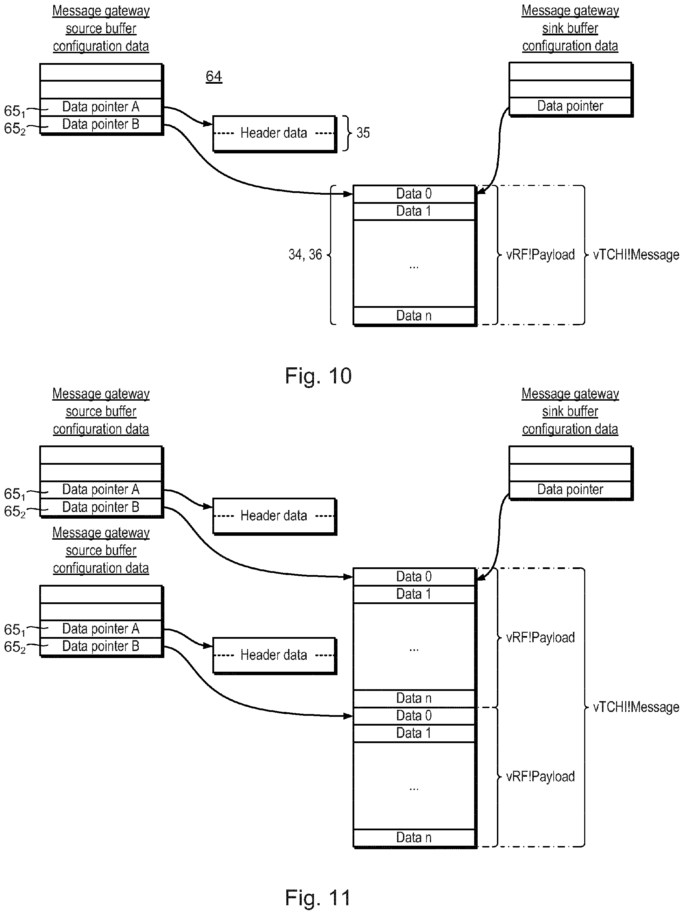

Referring to Figure 10, the source buffer 64 may include two data pointers 65₁, 65₂. A first data pointer 65₁ may index the header data field 35 and a second data pointer 65₂ may index the payload data field 36.

The use of two data pointers 65₁, 65₂ allows more than one payload section 36 of respective source buffers to be combined into a single payload section of a sink buffer, as shown in Figure 11.

The processor(s) 9 may be granted or denied access to the message buffers 64, 67. Access to a message buffer is controlled by message buffer configuration data.

Allowing access to source buffers enables an application to process received data. Denying access to source buffers helps to ensure that received data is not manipulated and that data integrity is maintained.

Allowing access to sink buffers enables additional control of payload data, if required, and to allow manual control of frame transmission from the sink buffer. Disallowing access to sink buffers helps to ensure that the messages is transmitted according to a schedule defined by buffer configuration and FlexRay protocol and that integrity of transmitted data is maintained.

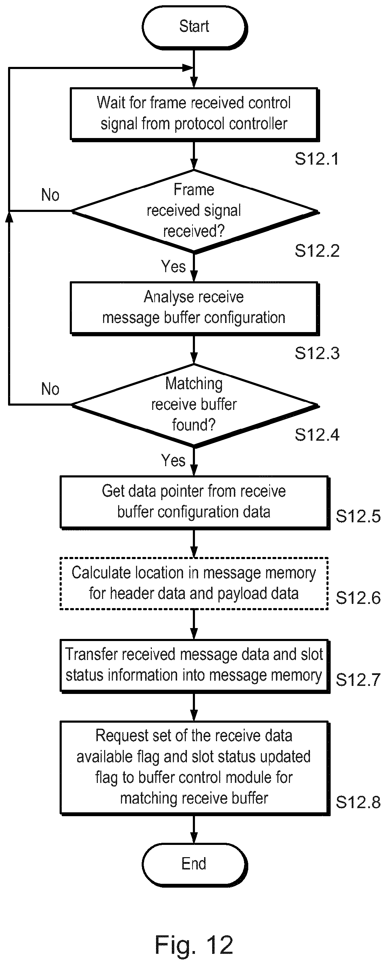

Operation of message data transfer controller 42 to receive and store a receive message in a receive buffer will now be described with reference to Figures 6, 7 and 12.

Upon reception of a valid FlexRay frame, the message data transfer controller 42 analyses the receive buffer configurations 66 whether there is a matching receive buffer assigned for the actual local time (step S12.1 to S12.4). Analysis of receive buffers is carried out in accordance with FlexRay.

If no matching receive buffer is found, the message data transfer controller 42 takes no further action and continues to wait for reception of a valid FlexRay frame (step S12.1).

If a matching receive buffer is found, then the message data transfer controller 42 requests data pointer(s) 65 for the matching receive buffer from the receive message configuration data 21₁ via the message buffer interface 14 (steps S12.5 & S12.6). The data pointer(s) can point directly to the address (i.e. the full address) or indirectly to the address (i.e. provide data pointer information which can be used to calculate the address, such as fixed or dynamic offset to a given reference address) for the message data in the message memory. If a direct address is provided, then step S12.6 can be omitted.

With the given address, the message data transfer controller 42 transfers the received message data, i.e. vRF!Header and vRF!Payload, and slot status for the receive slot from the protocol controller into the message memory 8 via the message buffer data interface 14 (step S12.7). As will be explained later, the transfer can be implemented using sequencer logic that controls the data and address bus and control signals on the interface to the message memory 8. To ensure that the application software can only access consistent sets of receive data, a message buffer locking mechanism can be used.

Upon completion of the data transfer, the message data transfer controller 42 requests a set of the receive data available flag and a set of the slot status updated flag to the buffer control module by setting the related control flags and providing the receive message buffer number to the buffer control module 41 (step S12.8).

Thus, a receive message is stored in a received buffer 64 having header and payload data 35, 36 which is indexed by a pointer 65 in (extended) receive buffer configuration data 66. The receive message can be accessed by application software 18 for (non-forwarding) processing.

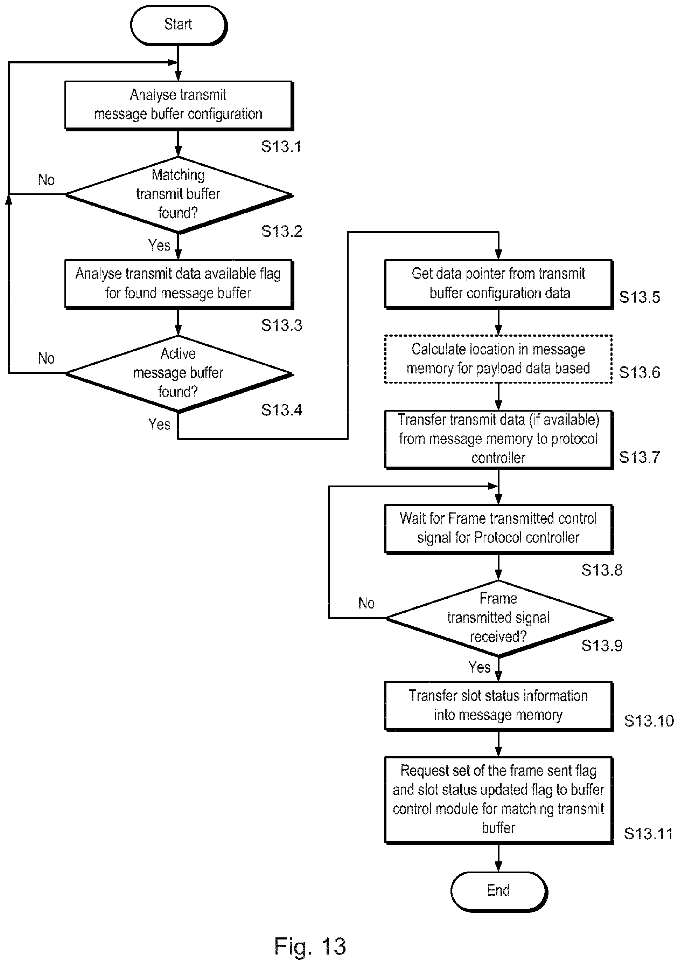

Operation of message data transfer controller 42 for retrieving a message from a transmit buffer 67 and transmitting the message will now be described with reference to Figures 6, 8 and 13.

The message buffer transfer controller 42 continuously analyses the transmit buffer configurations to determine whether there is a matching transmit buffer assigned for the actual local time and whether or not there is payload data available for transmission (step S13.1 to S13.4). Analysis is carried out in accordance with the requirements of FlexRay.

The message buffer transfer controller 42 continues to check until an active transmit buffer is found.

If an active message buffer is found, the message data transfer controller 42 retrieves the data pointer 68 for the active transmit buffer via the message buffer data interface 14 (step S13.5). The data pointer can point directly to the address (i.e. full address) or indirectly to the address (i.e. provide data pointer information which can be used to calculate the address, such as fixed or dynamic offset to a given reference address) for the message data in the message memory. If a direct address is provided, then step S13.6 can be omitted.

With the given address, the message data transfer controller 42 transfers the transmit message data (vTCH!Message) from the message memory 8 to the protocol controller 5 (step S13.7).

As explained hereinafter, the transfer can be implemented using sequencer logic that controls the data and address bus, and control signals on the interface to the message memory 8. To ensure that the application software can only access consistent sets of receive data, a message buffer locking mechanism can be used, for example, as described earlier.

Once the message data transfer controller 42 has received the frame transmitted signal from the protocol controller 9 (step S13.9), it transfers the slot status information for the transmit slot into the message memory via the message buffer data interface (step S13.10).

Upon completion of the transfer, the message data transfer controller 42 requests a set of the frame sent flag and a set of the slot status updated flag to the buffer control module 41 by setting the related control flags and providing the transmit message buffer number (step S13.11).

Thus, a transmit message is retrieved from a transmit buffer 67 having the transmit message data (vTCH!Message) 34 which is indexed by a pointer 68 in (extended) transmit buffer configuration data 67.

The message buffer control module 41 controls the status of message buffer service data 21₂ based on incoming control requests from the processor 9, message data transfer controller 42 and the gateway unit 61.

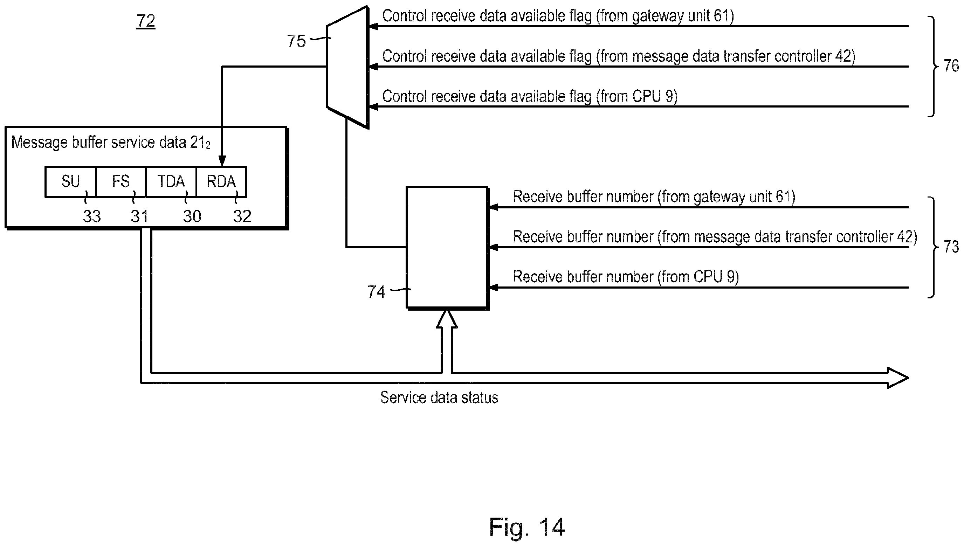

Figure 14 shows a control circuit 72 for one buffer and for only one flag, in this case, a receive data available (RDA) flag 32. A respective control circuit 72 is provided for each flag in each message buffer, although some parts of the circuit can be shared.

The selection of the message buffer is achieved using an incoming message buffer number 73 provided by an accessing source 9, 42, 61.

A request is serviced if it is not suppressed by a restriction coming from the FlexRay protocol controller 5, for example, performing a slot status update for a transmit buffer that was re-configured between the point in time where transmit data was provided to the protocol controller and the point in time where the slot status update is requested.

CPU requests are generated from CPU access requests translated into a control signals. Changing the message buffer service data 21₂ is restricted and depends on the status of the buffer and the current usage, for example, clearing the data available flag for message buffers that are currently updated by the message data transfer controller.

An access restriction module 74 is responsible for handling access restrictions to the message buffer service data 21₂. The module 74 controls another module 75 which receives a control signal 76 (in this case, control signals for RDA 32) from a source 9, 42, 61 and sets the corresponding flag in message buffer service data 21₂.

Referring again to Figure 6, the gateway unit 61 is used to perform the message routing and to control the message buffer service data 21₂. The gateway unit 61 extends the message buffer controller 7' and interfaces with the buffer controller unit 41 and message data transfer controller 42.

The gateway unit 61 comprises a routing table 62 and a flag control circuit 63.

The routing table 62 can be treated as message buffer configuration data and can be located in the message memory 8, for example, with other buffer configuration data. The routing table 62 can be stored in system memory. The routing table can be stored in the communication controller 7'.

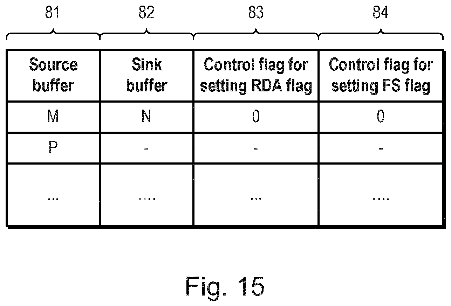

Referring also to Figure 15, the routing table 62 holds source and destination information 81, 82 to enable payload data from source buffer(s) to be routed to a sink buffer. Thus, the routing table 62 holds information to identify, for each sink buffer, which source buffer(s) has contributed to payload data.

The routing table 62 stores a control flag 83 for controlling whether or not to clear the RDA flag 32_{M} in the source buffer upon transmission out of the sink buffer. The routing table 62 stores a control flag 84 for controlling whether or not to clear a FS flag 31 in the sink buffer upon transmission of the message out of the sink buffer.

The gateway unit 61 includes a flag control unit 63 that controls message buffer service data 21₂. The gateway unit 61 monitors interaction between the message buffer controller 42 with the protocol controller 5, buffer control module 41 and the processor 6, and requests changes to the message buffer service data 21₂.

Operation of the gateway unit 61 will now be described with reference to Figures 6, 9 14 and 16.

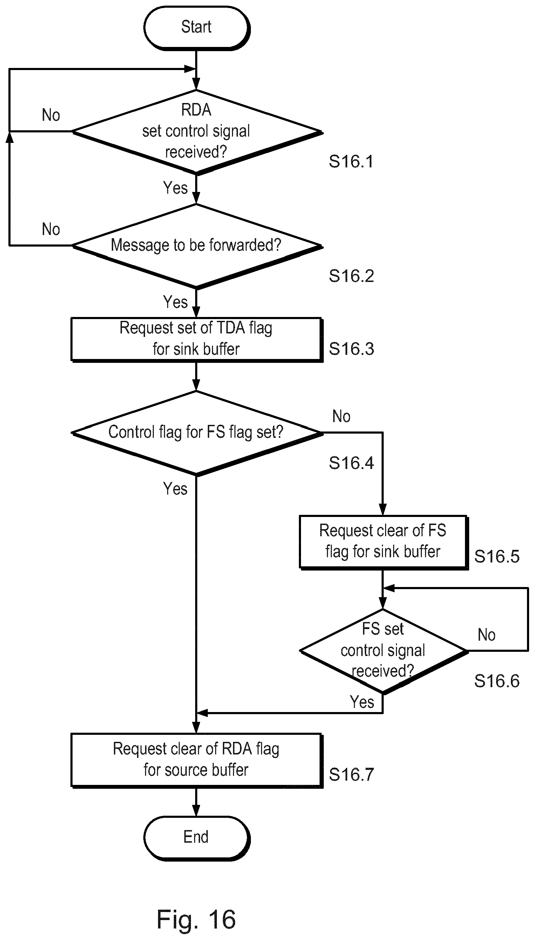

Referring to Figure 16, when a data frame is received, the message data transfer controller 42 requests an update of the assigned receive buffer 64 by providing a buffer number (e.g. M) 73 and an RDA flag control signal 76 to the buffer control module 41 (step S16.1).

The buffer control circuit 41 performs an update of the buffer service data 21₂, i.e. sets the RDA flag 32 and updates, if required, the SU flag 33.

The gateway unit 61 monitors this action, inspects the routing table 62 to see if the message is to be forwarded, i.e. whether a sink buffer 67 is listed for the updated buffer (step S13.2). If the message is to be forwarded, the gateway unit 61 sends a request to the buffer control module 41, with the sink buffer number, to set the TDA flag 30 in the message data service data 21₂ for the sink buffer (step S16.3).

The buffer control module 41 performs the required updates, i.e. sets the TDA flag 30.

If the content of the message buffer is to be forwarded, the gateway unit 61 is able to request that the FS flag 31 of the message buffer service data 21₂ is cleared for the sink buffer to allow the application software to analyse the status of the frame transmission (steps S16.4 to S16.6).

Upon transmission of the payload data 36 from the sink buffer 67, the protocol controller 5 informs the message data transfer controller 42 that a frame has been transmitted. The message data transfer controller 42 requests the buffer control circuit 41 to set the FS flag in the sink buffer (step S16.5 & S16.6). The buffer control circuit 41 updates the buffer service data 21₂.

The gateway unit 61 monitors this action and requests to clear the RDA flag 32 in the message buffer service data 21₂ for the source buffer 64 (step S16.7). The source buffer number is provided by the gateway unit 61. The buffer control circuit 41 performs the actual clear action in the message buffer service data 21₂ of the source buffer.

Using the gateway unit 61, the latency time between a received message being stored in the message memory 8 and the transmission control flags being set is predictable and does not depend on software execution time or other internal processing if processor access to the message buffer control process is assigned a lower priority than an internal access request. The data latency from the end of the reception until the data is available in the message memory is limited by the performance requirements of FlexRay.

The buffer control module 41 may contain, for each message buffer, a counter (not shown) that increments upon frame transmission. Resetting the counter is under control of the processor 9 (Figure 1).

The buffer control module 41 may contain, for each message buffer, a counter (not shown) that increments upon frame reception. Resetting the counter is under control of the processor 9 (Figure 1).

By comparing the transmission and receive counter values, the application is able to determine the number of frame transmission and frame reception during the observation period.

It will be appreciated that many modifications may be made to the embodiments hereinbefore described.

A communication controller may be used which handles communication according to another, different in-vehicle networking protocol, such as controller-area network (CAN) or TTEthernet.

## Claims

1. An in-vehicle networking protocol communications controller, comprising:
a protocol controller (5); and
a message buffer controller (7');
wherein the message buffer controller is implemented in hardware and comprises:
message data transfer controlling means (42) configured, in response to receiving a message comprising header data (35) and payload data (36) via the protocol controller, to store the message in a content data portion of a message buffer (21) using a header data pointer (65; 65₁) which points to the start of the message and which is held in a receive configuration data portion (66) of the message buffer; and
message routing controlling means (61) configured to determine whether the payload data (36) is to be forwarded and, in response to determining that the payload data is to be forwarded, to indicate that the payload data is available for transmission;
the message data transfer controlling means (42) configured, in response to determining that the payload data stored in the message buffer is to be forwarded, to retrieve the payload data using a payload data pointer (68) which is held in a transmit configuration data portion (67) of the message buffer and to transfer the payload data to the protocol controller for transmission,
**characterised in that** the payload data pointer (68) points to the payload of the data of the message; and
the message routing controlling means (61) is a gateway which comprises:
a routing table (62) which holds source and destination information (8 1, 82) to enable payload data from one or more source buffers (64) to be routed to a sink buffer (67).

2. A communications controller according to claim 1, wherein the receive configuration data portion (66) includes payload data pointer (65₂).

3. A communications controller according to claim 2, wherein the message data transfer controlling means (42) is configured, in response to receiving another message comprising further header data (35) and further payload data (36) via the protocol controller, to store the further header data and further payload data, wherein the content data and further content data portions are arranged such that the start of the further payload data follows the end of the payload data and wherein the further receive configuration data portion includes a pointer to the further payload data.

4. A communications controller according to any preceding claim, wherein the message routing controlling means (61) is configured, in response to determining that the payload data is to be forwarded, to determine whether the payload data has been transmitted and, in response to determining that the payload data has been transmitted, to indicate that the payload data is not available for transmission.

5. A communications controller according to any one of claims 1 to 4, which is FlexRay communications controller.

6. A communications controller according to any one of claims 1 to 4, which is a CAN communications controller.

7. A microcontroller comprising:
a communications controller according to any preceding claim; and
at least one central processing unit (CPU).

## Patentansprüche

1. Fahrzeugeigener Vernetzungsprotokollkommunikationscontroller, der Folgendes aufweist:
eine Protokollcontroller (5); und
einen Nachrichtenpuffercontroller (7');
wobei der Nachrichtenpuffercontroller in Hardware implementiert ist und Folgendes aufweist:
Nachrichtendatenübergabe-Steuereinrichtung (42), die konfiguriert ist, um als Reaktion auf den Empfang einer Nachricht, die Kopfdaten (35) und Nutzdaten (36) aufweist, über den Protokollcontroller die Nachricht unter Verwendung eines Kopfdatenzeigers (65; 65₁), der auf den Anfang der Nachricht zeigt und der in einem Empfangskonfigurationsdatenteil (66) des Nachrichtenpuffers enthalten ist, in einem Inhaltsdatenteil eines Nachrichtenpuffers (21) zu speichern; und
eine Nachrichtenrouting-Steuereinrichtung (61), die konfiguriert ist, um zu bestimmen, ob die Nutzdaten (36) weiterzuleiten sind, und als Reaktion auf das Bestimmen, dass die Nutzdaten weiterzuleiten sind, anzuzeigen, dass die Nutzdaten zur Übertragung verfügbar sind;
wobei die Nachrichtendatenübergabe-Steuereinrichtung (42) konfiguriert ist, um die Nutzdaten als Reaktion auf das Bestimmen, dass die im Nachrichtenpuffer gespeicherten Nutzdaten weiterzuleiten sind, unter Verwendung eines Nutzdatenzeigers (68), der in einem Übertragungskonfigurationsdatenteil (67) des Nachrichtenpuffers enthalten ist, abzurufen und die Nutzdaten zur Übertragung an den Protokollcontroller zu übergeben,
**dadurch gekennzeichnet, dass** der Nutzdatenzeiger (68) auf die Nutzlast der Daten der Nachricht zeigt und die Nachrichtenrouting-Steuereinrichtung (61) ein Gateway ist, der Folgendes aufweist:
eine Routingtabelle (62), die Quellen- und Zielinformationen (81, 82) enthält, um zu ermöglichen, dass Nutzdaten aus einem oder mehr Quellenpuffern (64) zu einem Senkenpuffer (67) geleitet werden.

2. Kommunikationscontroller nach Anspruch 1, wobei der Empfangskonfigurationsdatenteil (66) einen Nutzdatenzeiger (65₂) beinhaltet.

3. Kommunikationscontroller nach Anspruch 2, wobei die Nachrichtendatenübergabe-Steuereinrichtung (42) konfiguriert ist, um als Reaktion auf den Empfang einer weiteren Nachricht, die weitere Kopfdaten (35) und weitere Nutzdaten (36) aufweist, über den Protokollcontroller die weiteren Kopfdaten und weiteren Nutzdaten zu speichern, wobei die Inhaltsdaten und weitere Inhaltsdatenteile so angeordnet sind, dass der Anfang der weiteren Nutzdaten auf das Ende der Nutzdaten folgt, und wobei der weitere Empfangskonfigurationsdatenteil einen Zeiger auf die weiteren Nutzdaten hat.

4. Kommunikationscontroller nach einem der vorhergehenden Ansprüche, wobei die Nachrichtenrouting-Steuereinrichtung (61) konfiguriert ist, um als Reaktion auf das Bestimmen, dass die Nutzdaten weiterzuleiten sind, zu bestimmen, ob die Nutzdaten übertragen wurden, und als Reaktion auf das Bestimmen, dass die Nutzdaten übertragen wurden, anzuzeigen, dass die Nutzdaten nicht zur Übertragung verfügbar sind.

5. Kommunikationscontroller nach einem der Ansprüche 1 bis 4, der ein FlexRay-Kommunikationscontroller ist.

6. Kommunikationscontroller nach einem der Ansprüche 1 bis 4, der ein CAN-Kommunikationscontroller ist.

7. Mikrocontroller, der Folgendes aufweist:
einen Kommunikationscontroller nach einem der vorhergehenden Ansprüche und
wenigstens eine Zentraleinheit (CPU).

## Revendications

1. Contrôleur de communications à protocole de réseau sur véhicule, comprenant :
un contrôleur de protocole (5) ; et
un contrôleur de tampon de message (7') ;
dans lequel le contrôleur de tampon de message est mis en oeuvre sous forme matérielle et comprend :
un moyen de contrôle de transfert de données de message (42) configuré, en réponse à la réception d'un message comprenant des données d'en-tête (35) et des données de charge utile (36) par l'intermédiaire du contrôleur de protocole, pour mémoriser le message dans une partie de données de contenu d'un tampon de message (21) en utilisant un pointeur de données d'en-tête (65 ; 65₁) qui pointe vers le début du message et qui est contenu dans une partie de données de configuration de réception (66) du tampon de message ; et
un moyen de contrôle de routage de message (61) configuré pour déterminer que les données de charge utile (36) doivent être acheminées ou non et, en réponse à la détermination que les données de charge utile doivent être acheminées, indiquer qu'il existe des données de charge utile à transmettre ;
le moyen de contrôle de transfert de données de message (42) configuré, en réponse à la détermination que les données de charge utile mémorisées dans le tampon de message doivent être acheminées, pour recouvrer les données de charge utile au moyen d'un pointeur de données de charge utile (68) qui est contenu dans une partie de données de configuration de transmission (67) du tampon de message et transférer les données de charge utile au contrôleur de protocole en vue de leur transmission,
**caractérisé en ce que** le pointeur de données de charge utile (68) pointe vers la charge utile des données du message ; et
le moyen de contrôle de routage de message (61) est une passerelle qui comprend :
une table de routage (62) qui contient des informations de source et de destination (81, 82) pour permettre le routage des données de charge utile depuis un ou plusieurs tampons sources (64) à un tampon destinataire (67).

2. Contrôleur de communications selon la revendication 1, dans lequel la partie de données de configuration de réception (66) comporte un pointeur de données de charge utile (65₂).

3. Contrôleur de communications selon la revendication 2, dans lequel le moyen de contrôle de transfert de données de message (42) est configuré, en réponse à la réception d'un autre message comprenant d'autres données d'en-tête (35) et d'autres données de charge utile (36) par l'intermédiaire du contrôleur de protocole, pour mémoriser les autres données d'en-tête et autres données de charge utile, dans lequel les parties de données de contenu et d'autres données de contenu sont agencées de telle sorte que le début des autres données de charge utile suive la fin des données de charge utile et dans lequel la partie d'autres données de configuration de réception comporte un pointeur vers les autres données de charge utile.

4. Contrôleur de communications selon l'une quelconque des revendications précédentes, dans lequel le moyen de contrôle de routage de messages (61) est configuré, en réponse à la détermination que les données de charge utile doivent être acheminées, pour déterminer que les données de charge utile ont été transmises et, en réponse à la détermination que les données de charge utile ont été transmises, indiquer qu'il n'y a pas de données de charge utile à transmettre.

5. Contrôleur de communications selon l'une quelconque des revendications 1 à 4, lequel est un contrôleur de communications FlexRay.

6. Contrôleur de communications selon l'une quelconque des revendications 1 à 4, lequel est un contrôleur de communications CAN.

7. Microcontrôleur comprenant :
un contrôleur de communications selon l'une quelconque des revendications précédentes ; et
au moins une unité centrale de traitement (UCT).
